# EUROPÄISCHE PATENTSCHRIFT

(11) **EP 1 036 712 B1**
(45) Veröffentlichungstag und Bekanntmachung des Hinweises auf die Patenterteilung: **02.06.2004**
(21) Anmeldenummer: 00104444.5
(22) Anmeldetag: 06.03.2000
(51) Int. Cl.: B60R 16/02

(54) **Kabel- und Leitungsführung innerhalb von Fahrzeugteilen und Verfahren zur Herstellung einer Kabel- und Leitungsführung**
Guide for cables and ducts in vehicle components and procedure for manufacturing a cables and ducts guide
Guide de cables et de conduites à l'intérieur de parties de véhicule et procédé de fabrication d'un guide de cables et de conduites

(30) Priorität: 16.03.1999 DE 19911650
(43) Veröffentlichungstag der Anmeldung: 20.09.2000
(73) Patentinhaber: Volkswagen Aktiengesellschaft, 38436 Wolfsburg (DE)
(72) Erfinder: Neumüller, Helmut, 38557 Osloss (DE); Kastner, Michael, Dipl.-Ing., 38446 Wolfsburg (DE)

(56) Entgegenhaltungen:
- DE-A- 3 609 609
- DE-C- 3 309 149
- US-A- 5 495 076

## Beschreibung

Die Erfindung betrifft eine Kabel- und Leitungsführung sowie ein Verfahren zur Herstellung einer derartigen Kabel- und Leitungsführung innerhalb von Fahrzeugteilen, wobei eine Konzentration der elektrischen Anschlußstellen sowie der damit verbundenen Verkabelung vorhanden ist.

Im Kraftfahrzeugbau besteht die Notwendigkeit, eine Vielzahl von elektrischen Verbrauchern, Bedienungs- und Steuerelementen sowie Instrumente und Sensoren miteinander elektrisch zu verbinden. Besonders problematisch ist die Verkabelung in solchen Fahrzeugteilen, in denen eine Vielzahl von elektrischen Bauteilen vorhanden ist. So ist beispielsweise die Montage des Cockpitmoduls zeitaufwendig und mit viel Handarbeit verbunden. Dabei muß zunächst die Vorverkabelung am sogenannten Zentralrohrträger durchgeführt werden. Der Zentralrohrträger wird mit einem an der Karosserie dichtend befestigten Modulträger elektrisch verbunden. Hierzu werden elektrische Kabel und Leitungen eingelegt, befestigt und kontaktiert. Entsprechende Kabel mit endseitigen Kupplungselementen zum Anschluß der Armaturentafel werden am Zentralrohrträger befestigt. Nach dieser Komplettierung wird die Instrumententafel übergestülpt und verschraubt. Anschließend müssen die Kabel und Leitungen mit den Kupplungselementen durch die für den Sitz der Bedien-, Steuer- und Anzeigeelemente zuständigen Öffnungen gefädelt werden. Es erfolgt die Kontaktierung mit den entsprechenden Bedien-, Steuer- und Anzeigeelementen, wonach diese Elemente an der Instrumententafel bei gleichzeitigem Zurückschieben der Kabel befestigt werden. Bei diesen Arbeiten treten, erhebliche Montageprobleme auf, da die Durchfädelöffnungen klein sind, eine erschwerte Zugänglichkeit vorhanden ist, freihängende Stecker mit der Hand ergriffen und in Kontakt gebracht werden müssen und bei Elementen z. B. Schaltern, die nur von hinten anstelle von vorn eingeschoben werden, eine besondere Geschicklichkeit notwendig ist. Für diese Montage und für spätere Reparaturarbeiten sind Überlängen der Kabel und Leitungen erforderlich.

Die DE 3513048 A1 beschreibt die Versorgung von in einer Fahrzeugtür angeordneten Verbrauchern mit Energie. Dabei wird eine elektrische Verbindung zwischen den Bedienelementen wie Schaltern und den elektrischen Verbrauchern in Komplexbauweise dargestellt. Eine nicht immer zu realisierende Bedingung ist, daß sämtliche elektrische Schalter in einem Innengriff der Fahrzeugtür konzentriert sein müssen. Sämtliche von den Schaltern abgehende Leitungen sind zu einem am Befestigungsflansch integrierten zentralen Kupplungsteil geführt, welches aus der Befestigungsflansch-Ebene hervorragt. Die Türinnenverkleidung trägt auf ihrer der Anlagefläche des Innengriffs zugekehrten Stelle ein Kupplungsteilgegenstück. Bei der Montage des Innengriffs müssen die beiden Kupplungsteile mit genauer Justierung ineinandergefügt werden, wobei die Steckerstifte in die Buchsen des Gegenstückes eingreifen. Dabei wird eine elektrische Verbindung zwischen den am Innengriff angeordneten Schaltern und den in der Tür montierten elektrischen Verbrauchern hergestellt. Diese sogenannte Zentralkupplung stellt eine ganz spezielle nur für diesen Zweck geeignete aufwendige Konstruktion dar. Auf Grund der Vielzahl von ineinandergreifenden Steckerstiften und Buchsen ist eine genaue Justierung bei der Montage erforderlich. Bei Kontaktproblemen beispielsweise für ein elektrisches Element muß die gesamte Zentralkupplung ausgetauscht und eine Vielzahl von elektrischen Anschlüssen abgeklemmt und wieder angeschlossen werden.

Aus der DE 35 30 413 A1 ist ein dreiteiliger Bausatz bekannt, der aus einem nichtleitenden Tragteil, einem konfektionierten Kabelbaum und einem geformten, aus Schaummaterial bestehnden Abdeckteil besteht. Im Tragteil sind beidseitig zu benutzende Stecker- bzw. Kupplungsteile eingespritzt, die mit dem Kabelbaum durch Löten oder Schweißen elektrisch verbunden sind. Diesen Stecker- bzw. Kupplungsteilen gegenüberliegend sind an der Karosserieseite paßfähige Gegenstecker- bzw. Kupplungsteile vorgesehen, die ihrerseits über Leitungen mit elektrischen Verbrauchern in Verbindung stehen. Bei der Kontaktierung der Stecker und Kupplungsteile wird der Anschluß der elektrischen Verbraucher an den Kabelbaum realisiert. An der den elektrischen Verbrauchern gegenüberliegenden und dem Fahrzeuginnenraum zugewandten Seite des Tragteiles sind über ein paßfähiges Kupplungsgegenstück und entsprechende Leitungen elektrische Schalter oder Module angeschlossen. Der Kabelbaum ist im Tragteil durch Ausformungen oder Leiterkanäle fixiert. Für jede Verwendung muß ein dreiteiliger Bausatz angefertigt werden. Der Kabelbaum ist dafür vorzubereiten und die Stecker- und Kupplungsteile sind je nach Einsatz an bestimmten Stellen zu positionieren und im Tragteil einzuspritzen. Durch die starre Konstruktion des Tragteiles mit beidseitig zu benutzenden Stecker- bzw. Kupplungsteilen werden zusätzliche Trennstellen geschaffen, so daß Qualitätsnachteile bei der elektrischen Übertragung zunehmen. Eine Korrosion der Kontaktteile im Außenbereich ist gegeben. Auf Grund der fixierten Kupplungsstellen und des starren Tragteiles ist eine Ausrichtung der Fahrzeugteile bei der Endmontage problematisch.

Aus der DE 33 09 149 C1, die den Oberbegriff des Anspruchs 1 zeigt, ist eine mehrwandige Fahrzeugtür mit einem zwischen einer Innenwand und einer dieselbe abdeckenden Türverkleidung angeordneten nutzbaren Hohlraum bekannt, welcher in der oberen Hälfte der Innenwand angeordnet ist und sich etwa parallel zur horizontalen Breitkante der Tür erstreckt, wobei der Hohlraum durch einen sich über die Breite der Tür erstreckenden konkaven Profilkanal der Innenwand gebildet ist, in welchem eine über ein Zuleitungskabel mit der Bordenergiequelle des Fahrzeuges verbundene Leiterplatte mit mindestens einem Funktionselementenanschluss für Anschlusskabel und/oder Anschlussglieder von elektrischen Funktionselementen des Fahrzeuges befestigt ist. Der Profilkanal weist einen etwa U-förmigen Querschnitt auf, dessen Stege sich etwa lotrecht und dessen die Stege verbindender Schenkel sich etwa parallel zur Innenwand erstrecken. Der Schenkel und/oder die Stege sind mit Durchbrüchen versehen, wobei die Wandungen der Durchbrüche. Rastvorsprünge bilden, welche mit Rastnasen der Anschlussglieder eine Rastverbindung herstellen.

Aus der DE 36 09 609 A1 ist eine mehrwandige Fahrzeugtür gemäß der DE 33 09 149 C1 bekannt, wobei die elektrische Montageeinheit ein Zentralsteckergehäuse aufweist, in welches ein von der karosserieseitigen Fahrzeugzentralelektrik kommender Kabelstrang einmündet, wobei dem Zentralsteckergehäuse Steckergehäuse für eine .Anzahl von Funktionselementen zugeordnet sind, wobei bei entsprechendem Ausstattungsumfang an das Zentralsteckergehäuse ein mit den Steckergehäusen weiterer Funktionselemente gekoppeltes Elektronikmodul anschließbar und die elektronische Montageeinheit als Unterbau für darauf aufgesetzte Bedienschalter zum Betätigen der Funktionselemente dient. Zum Arretieren der einzelnen Steckergehäuse an einem Schatullenrahmen bzw. am Zentralsteckergehäuse dienen Klemmleisten.

Der Erfindung liegt die Aufgabe zugrunde, eine Kabel- und Leitungsführung innerhalb von Fahrzeugteilen und ein Verfahren zur Herstellung einer derartigen Kabel- und Leitungsführung anzugeben, wobei bei Vorhandensein einer Vielzahl von herkömmlichen benachbarten elektrischen Kupplungen eine Kontaktierung aller Kupplungsteile ohne großen Montageaufwand schnell und sicher möglich ist.

Die Aufgabe wird erfindungsgemäß durch eine Kabel- und Leitungsführung mit den Merkmalen des Patentanspruches 1 sowie durch ein Verfahren zur Herstellung einer derartigen Kabel- und Leitungsführung mit den Merkmalen des Patentanspruches 6 gelöst. Aus- und Weiterentwicklungen der Erfindung sind in den Unteransprüchen niedergelegt.

Die Erfindung beruht darauf, daß die freibeweglichen Kupplungsteile der konfektionierten Kabel- und Leitungen zum Anschluß an elektrische Verbraucher, Bedienungs- und Steuerelemente sowie Instrumente und Sensoren über eine Kupplungsaufnahmeleiste so fixiert sind, daß die dazugehörigen Kupplungsgegenstücke der anzuschließenden elektrischen Bauelemente fluchten und steckbar sind. Die Kupplungsteile sind durch ein spezielles Klemmsystem mittels Nut und rippen- und nasenartigen Halterungen in die kammerartigen Kupplungsaufnahmen eingesetzt, so daß nach dem Fixieren der Kupplungsaufnahmeleiste an benachbarten Fahrzeugteilen Steck- und Abzugskräfte bei der Montage sicher aufgenommen werden. Zwischen den Kupplungsteilen und den kammerartigen Kupplungsaufnahmen ist bezüglich der Abmessungen ein Toleranzspiel vorhanden, so daß eine schwimmende Lagerung der Kupplungsteile gegeben ist und eine Anpassung an die Position des Kupplungsgegenstückes möglich ist.

Die Form- und Farbcodierungen der Kupplungsaufnahmen gewährleisten, daß die jeweils passenden Kupplungsteile zueinander geführt werden.

Die für die Montage notwendigen Kabel- und Leitungsüberlängen werden über die den kammerartigen Kupplungsaufnahmen zugeordneten Klemmrippen positioniert, so daß Beeinträchtigungen anderer Aggregate oder Klappergeräusche vermieden werden.

Eine besonders bevorzugte Ausbildung der Erfindung sieht vor, die Kupplungsaufnahmeleiste als Steckerleiste im Cockpit einzusetzen. Dabei sind die Stecker der konfektionierten Leitungen, die zum Anschluß des Cockpitmoduls, insbesondere der Instrumententafel vorgesehen sind, in der Kupplungsaufnahmeleiste fixiert und lokal so positioniert, daß die entsprechenden Kupplungsgegenstücke in Form von Klemmbuchsen oder Klemmzungen der Schalter aufgesetzt werden können.

Der Vorteil der Erfindung ist hier augenscheinlich, weil umständliche Durchführ- und Fädelarbeiten bei beengten Raumverhältnissen entfallen. Die Kupplungsaufnahmeleiste für die Stecker ist im nicht sichtbaren Montageraum hinter der Instrumententafel angeordnet und in ihren Abmessungen so beschaffen, daß der herkömmliche Cockpitaufbau nicht verändert werden muß. Durch das Ausrichten der Kupplungsaufnahmeleiste für die Stecker zur Schalttafel und Instrumententafel erfahren die Schaltergehäuse eine geeignete Führung zur Verbesserung des Fugenbildes.

Das Verfahren zur Herstellung der Kabel- und Leitungsführung innerhalb von Fahrzeugteilen läßt den Vorteil erkennen, daß durch die bereits fixierten und positionierten Kupplungsteile eine schnelle und sichere Komplexmontage auch unter Robotereinsatz möglich wird.

Die Erfindung wird im folgenden an Hand eines bevorzugten Ausführungsbeispiels näher erläutert.

Die zugehörigen Zeichnungen zeigen:
- Fig. 1: eine Kupplungsaufnahmeleiste in perspektivischer Darstellung
- Fig. 2: eine schematische Darstellung der Kabel- und Leitungsführung im Cockpit

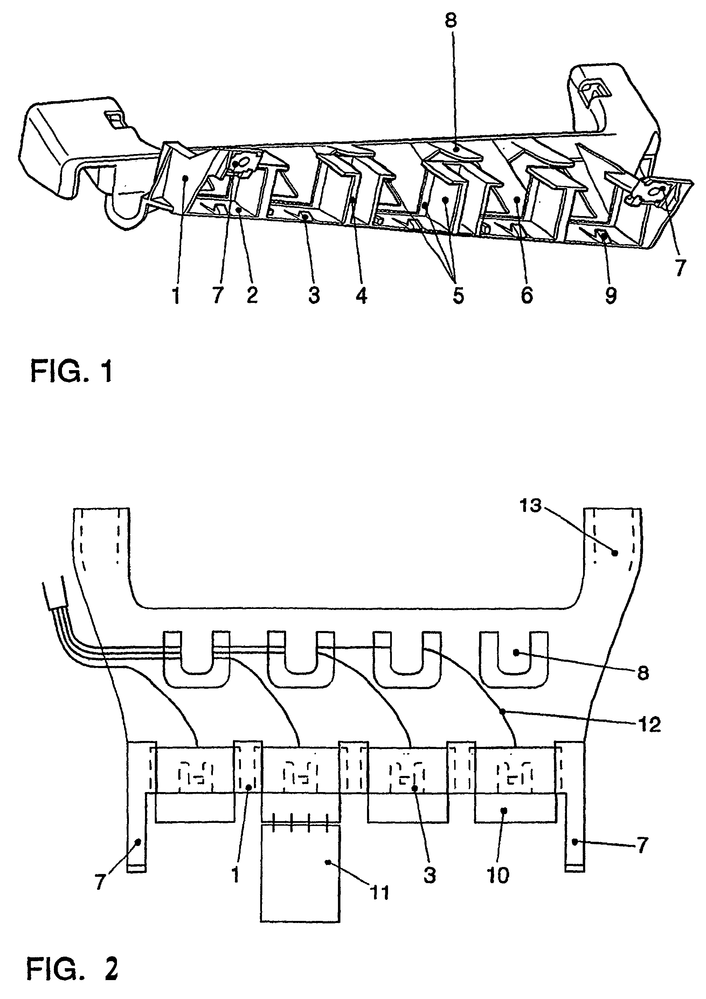

Fig. 1 zeigt den Aufbau der Kupplungsaufnahmeleiste 1. Sie besteht aus einem Basisteil 2, auf das Wandteile 4 aufgesetzt sind. Die Wandteile 4 besitzen eine abgewinkelte Form mit oberen und seitlichen Anschlagflächen 5. Dadurch entstehen kammerartige Kupplungsaufnahmen 6, in die Stecker oder die entsprechenden Kupplungsgegenstücke eingesetzt sind. Die eingesetzten Kupplungsteile werden durch die Wandteile 4, die entsprechenden oberen und seitlichen Anschlagflächen 5 sowie durch das Basisteil 2 fixiert. Darüber hinaus sind rippen- und nasenartige Halterungen 3 mit einer nach innen zur kammerartigen Kupplungsaufnahme 6 gerichteten Anschlagfläche 9 am Basisteil 2 angesetzt, die in das eingesetzte Kupplungsteil einrasten, eine zusätzliche Fixierung des eingesetzten Kupplungsteiles bewirken und insbesondere Abzugskräfte beim Entkuppeln aufnehmen. Die Kupplungsaufnahmeleiste 1 wird über Fixpunkte 7 am Montageort an geeigneten benachbarten nicht näher dargestellten Fahrzeugteilen befestigt.

Fig. 2 zeigt den Einsatz der Kupplungsaufnahmeleiste im Cockpit. Die Kupplungsaufnahmeleiste 1 ist über Ansatz 13 auf Stützen am Zentralrohr aufgeklippt. Nachdem die Instrumententafel mit der Schalttafel verschraubt ist, wird die Kupplungsaufnahmeleiste 1, welche als Steckerleiste fungiert, an der Instrumententafel über Fixpunkte 7 in Position gebracht und vorzugsweise über eine Verschraubung fixiert. Die Stecker 10 mit den Leitungen 12 sind in die kammerartigen Kupplungsaufnahmen 6 eingesetzt. Dabei greifen die rippen- und nasenartigen Halterungen 3 in eine am Stecker angeordnete Nut ein, so daß die Anschlagfläche 9 den Stecker 10 vor dem Herausziehen bewahrt. Die eingesetzten Stecker 10 sind schwimmend gelagert, so daß sie sich bei der Kontaktierung endgültig ausrichten. Die kammerartigen Kupplungsaufnahmen 6 besitzen in Form und Farbe eine unterschiedliche Gestalt, so daß die entsprechenden Stecker zu den passenden Kupplungsgegenstücken bzw. Schaltern 11 durch die zwischen Zentralrohr und Instrumententafel angeordnete Kupplungsaufnahmeleiste positioniert und darüber hinaus lagefixiert sind. Eine zeitraubende und umständliche Handmontage bei der vorhandenen Zugangsproblematik entfällt. Der Schalter 11 kann an der vorgesehenen Stelle in den dafür passenden Stecker 10 gesteckt werden, wobei Schalter 11 und Stecker 10 miteinander fluchten. Die Leitungen 12 werden durch die Klemmrippen 8 in ihrer Lage gehalten.

### BEZUGSZEICHENLISTE

- 1: Kupplungsaufnahmeleiste
- 2: Basisteil
- 3: rippen- und nasenartige Halterungen
- 4: Wandteile
- 5: Anschlagflächen
- 6: Kupplungsaufnahmen
- 7: Fixpunkte
- 8: Klemmrippen
- 9: Anschlagfläche
- 10: Stecker
- 11: Schalter
- 12: Leitungen

## Patentansprüche

1. Kabel- und Leitungsführung innerhalb von Fahrzeugteilen, umfassend Kupplungsteile (10) sowie eine Kupplungsaufnahmeleiste (1), die mit oberen und seitlichen Anschlagflächen (5) ausgebildet ist, die zur Aufnahme der Kupplungsteile (10) dienen, wobei die Kupplungsaufnahmeleiste (1) an benachbarten Fahrzeugteilen arretierbar ist,
**dadurch gekennzeichnet, dass**
die oberen und seitlichen Anschlagflächen (5) kammerartige Kupplungsaufnahmen (6) bilden, in denen die eingesetzten Kupplungsteile (10) mit umlaufenden Luftspalt schwimmend gelagert sind, wobei die Kupplungsaufnahmeleiste (1) mit rippen- oder nasenartigen Halterungen (3) für die Kupplungsteile (10) davon ausgebildet ist.

2. Kabel- und Leitungsführung nach Anspruch 1, **dadurch gekennzeichnet, dass** als Kupplungsteile (10) Stecker oder Steckbuchsen eingesetzt sind.

3. Kabel- und Leitungsführung nach Anspruch 1 oder 2, **dadurch gekennzeichnet, dass** die in die Kupplungsaufnahmeleiste (1) eingesetzten Kupplungsteile (10) über eine am Kupplungsteil angeordnete Nut und der an einem Basisteil (2) der Kupplungsaufnahmeleiste (1) angesetzten rippen- und nasenartigen Halterung (3) und einer Anschlagfläche (9) fixiert sind.

4. Kabel- und Leitungsführung nach einem der vorangegangenen Ansprüche, **dadurch gekennzeichnet; dass** die Kupplungsaufnahmen (6) form- und farbcodiert sind.

5. Kabel- und Leitungsführung nach einem der vorangegangenen Ansprüche, **dadurch gekennzeichnet, dass** die Kupplungsaufnahmeleiste (1) mit Klemmrippen (8) zum Fixieren von Kabel- und Leitungsüberlängen versehen ist.

6. Verfahren zur Herstellung der Kabel- und Leitungsführung innerhalb von Fahrzeugteilen mittels einer Kupplungsaufnahmeleiste (1) nach einem der Ansprüche 1 bis 5,
**dadurch gekennzeichnet, dass**
die Kupplungsaufnahmeleiste (1) arretiert wird, konfektionierte Kupplungsteile (10) in kammerartige, codierte Kupplungsaufnahmen (6) eingesetzt werden und nach der Montage von Anschlußteilen die entsprechenden Kupplungsgegenstücke mit den fixierten Kupplungsteilen (10) in der Kupplungsaufnahme (1) in Kontakt gebracht werden.

7. Verfahren nach Anspruch 6, **dadurch gekennzeichnet, dass** beim Einsatz im Cockpit die Kupplungsaufnahmeleiste (1) an der Instrumententafel arretiert wird, konfektionierte Stecker (10) in die kammerartigen Kupplungsaufnahmen (6) eingesetzt werden und nach dem Aufsetzen der Instrumententafel die entsprechenden Schalter (11) mit Klemmzungen mit den fixierten Steckern (10) in Kontakt gebracht werden.

## Claims

1. Cable and line routing within vehicle parts, comprising coupling parts (10) and a coupling holding strip (1) which is designed with upper and lateral stop surfaces (5) which serve to hold the coupling parts (10), the coupling holding strip (1) being lockable to adjacent vehicle parts, **characterized in that** the upper and lateral stop surfaces (5) form chamber-like coupling holders (6) in which the inserted coupling parts (10) are mounted in a floating manner with an encircling air gap, the coupling holding strip (1) being designed with rib- or lug-like securing devices (3) for the coupling parts (10).

2. Cable and line routing according to Claim 1, **characterized in that** plugs or plug sockets are used as the coupling parts (10).

3. Cable and line routing according to Claim 1 or 2, **characterized in that** the coupling parts (10) which are inserted into the coupling holding strip (1) are fixed in place via a groove arranged on the coupling part and the rib- and lug-like securing device (3) fixed on a base part (2) of the coupling holding strip (1) and a stop surface (9).

4. Cable and line routing according to one of the preceding claims, **characterized in that** the coupling sockets (6) are shape- and colour-coded.

5. Cable and line routing according to one of the preceding claims, **characterized in that** the coupling holding strip (1) is provided with clamping ribs (8) for fixing excess cable and line lengths in place.

6. Method for producing the cable and line routing within vehicle parts by means of a coupling holding strip (1) according to one of Claims 1 to 5, **characterized in that** the coupling holding strip (1) is locked in place, ready-made coupling parts (10) are inserted into chamber-like, coded coupling holders (6) and, after installation of connecting parts, the corresponding coupling counterparts are brought into contact with the fixed coupling parts (10) in the coupling holder (1).

7. Method according to Claim 6, **characterized in that**, when used in the cockpit, the coupling holding strip (1) is locked in place on the instrument panel, ready-made plugs (10) are inserted into the chamber-like coupling holders (6) and, after the instrument panel is placed on, the corresponding switches (11) are brought into contact with the fixed plugs (10) by means of clamping tongues.

## Revendications

1. Guide pour câbles et conducteurs à l'intérieur de pièces de véhicules, qui comprend des pièces d'accouplement (10) et une latte (1) de réception d'accouplements configurée avec des surfaces latérales et des surfaces supérieures de butée (5) qui servent à recevoir les pièces d'accouplement (10), la latte (1) de réception d'accouplements pouvant être verrouillée sur des pièces voisines du véhicule, **caractérisé en ce que** les surfaces latérales et les surfaces supérieures de butée (5) forment des logements (6) d'accouplements en forme de peigne dans lesquels les pièces d'accouplement (10) utilisées sont montées de manière flottante avec un interstice d'air périphérique, la latte (1) de réception d'accouplements étant configurée avec des retenues (3) du type en nervures ou en becs pour les pièces d'accouplement (10).

2. Guide pour câbles et conducteurs selon la revendication 1, **caractérisé en ce que** comme pièces d'accouplement (10), il utilise des prises ou des fiches.

3. Guide pour câbles et conducteurs selon la revendication 1 ou 2, **caractérisé en ce que** les pièces d'accouplement (10) insérées dans la latte (1) de réception d'accouplements sont fixées à la retenue (3) du type en nervure ou en bec ménagée sur une pièce de base (2) de la latte (1) de réception d'accouplements et à une surface de butée (9) à l'aide d'une rainure disposée sur la pièce d'accouplement.

4. Guide pour câbles et conducteurs selon l'une des revendications précédentes, **caractérisé en ce que** les logements (6) des accouplements ont une forme et une couleur codées.

5. Guide pour câbles et conducteurs selon l'une des revendications précédentes, **caractérisé en ce que** la latte (1) de réception d'accouplements est dotée de nervures de serrage (8) pour fixer les longueurs en excès des câbles et conducteurs.

6. Procédé de fabrication du guide pour câbles et conducteurs à l'intérieur de pièces de véhicules au moyen d'une latte (1) de réception d'accouplements selon l'une des revendications 1 à 5, **caractérisé en ce que** la latte (1) de réception d'accouplements est verrouillée, des pièces d'accouplement (10) confectionnées sont insérées dans des logements (6) d'accouplements, codés et en forme de peigne, et **en ce qu'**après le montage de pièces de fermeture, les pièces complémentaires d'accouplement correspondantes sont mises en contact avec les pièces d'accouplement (10) dans le logement (1) de l'accouplement.

7. Procédé selon la revendication 6, **caractérisé en ce que** lorsqu'elle est utilisée dans l'habitacle, la latte (1) de réception d'accouplements est verrouillée sur le tableau de bord, des prises (10) confectionnées sont insérées dans les logements (6) d'accouplements en forme de peigne et **en ce qu'**après que le tableau de bord a été placé, les commutateurs (11) correspondants dotés de pattes de serrage sont mis en contact avec les prises (10) qui ont été fixées.
